(19) Europäisches Patentamt / European Patent Office / Office européen des brevets

(11) **EP 2 315 405 B1**

(12) **FASCICULE DE BREVET EUROPEEN**

(45) Date de publication et mention
de la délivrance du brevet:
**05.06.2013 Bulletin 2013/23**

(51) Int Cl.:
*H04L 27/22* *(2006.01)*       *H04L 27/34* *(2006.01)*
*H04L 27/38* *(2006.01)*

(21) Numéro de dépôt: **10013721.5**

(22) Date de dépôt: **18.10.2010**

(54) **Procédé et dispositif de détection d'une erreur de phase d'un signal modulé numériquement par déplacement de phase et/ou d'amplitude**

Verfahren und Vorrichtung zur Detektion von Phasenfehlern bei PSK- bzw. QAM-modulierten Signalen

Method and device for error phase detection of PSK and/or QAM modulated signals

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2009 FR 0905081**

(43) Date de publication de la demande:
**27.04.2011 Bulletin 2011/17**

(73) Titulaire: **STMicroelectronics (Grenoble 2) SAS 38000 Grenoble (FR)**

(72) Inventeur: **Meyer, Jacques 38950 Saint-Martin-Le-Vinoux (FR)**

(74) Mandataire: **Marchand, André et al OMNIPAT 24 Place des Martyrs de la Résistance 13100 Aix-en-Provence (FR)**

(56) Documents cités:
• PEIXIN DONG ET AL: "Iterative phase recovery method of turbo-coded 16QAM based on soft symbol to bit mapping" THE 2004 JOINT CONFERENCE OF THE 10TH ASIA-PACIFIC CONFERENCE ON COMMUNICATIONS AND THE 5TH INTERNATIONAL SYMPOSIUM ON MULTI-DIMENSIONAL MOBILE COMMUNICATIONS PROCEEDINGS, BEIJING, CHINA 2004, vol. 2, 29 août 2004 (2004-08-29), - 1 septembre 2004 (2004-09-01) pages 782-787, XP010765070 NY, USA ISBN: 978-0-7803-8601-3

• MACKENTHUN K: "A fast algorithm for maximum likelihood detection of QPSK or pi /4-QPSK sequences with unknown phase" THIRD IEEE INTERNATIONAL SYMPOSIUM ON PERSONAL, INDOOR AND MOBILE RADIO COMMUNICATIONS, 1992, 19 octobre 1992 (1992-10-19), - 21 octobre 1992 (1992-10-21) pages 240-244, XP010107092 NY, USA ISBN: 978-0-7803-0841-1

• DIVSALAR D ET AL: "MAXIMUM-LIKELIHOOD DIFFERENTIAL DETECTION OF UNCODED AND TRELLIS CODED AMPLITUDE PHASE MODULATION OVER AWGN AND FADING CHANNELS- METRICS AND PERFORMANCE" IEEE TRANSACTIONS ON COMMUNICATIONS, vol. 42, no. 1, 1 janvier 1994 (1994-01-01), pages 76-89, XP000442860 NJ, US ISSN: 0090-6778

• NELE NOELS ET AL: "Performance Analysis of ML-Based Feedback Carrier Phase Synchronizers for Coded Signals" IEEE TRANSACTIONS ON SIGNAL PROCESSING, vol. 55, no. 3, 1 mars 2007 (2007-03-01), pages 1129-1136, XP011165449 NY, USA ISSN: 1053-587X

• LINN Y: "A robust phase detection structure for M-PSK: theoretical derivations, simulation results, and system identification analysis" CANADIAN CONFERENCE ON ELECTRICAL AND COMPUTER ENGINEERING, 2005, 1 mai 2005 (2005-05-01), - 4 mai 2005 (2005-05-04) pages 869-883, XP010868944 NJ, USA ISBN: 978-0-7803-8885-7

EP 2 315 405 B1

## Description

La présente invention concerne un procédé et un dispositif de détection d'une erreur de phase d'un signal reçu. La présente invention s'applique notamment à la réception d'un signal modulé numériquement par déplacement de phase et éventuellement en amplitude. Une telle modulation qui peut être de type m-PSK (m-states Phase-Shift Keying) ou m-APSK (m-states Amplitude and Phase Shift Keying), consiste à donner à une porteuse une phase et/ou une amplitude, pouvant prendre un nombre fini de valeurs, selon la valeur du signal à transmettre. Les valeurs de phase et d'amplitude données par le modulateur formant dans le plan complexe ce que l'on appelle une constellation d'un nombre fini de points. La norme DVB-S2 (Digital Video Broadcasting - Satellite 2nd génération) applicable à la transmission par satellite d'un ou plusieurs flux audio ou vidéo MPEG-2 ou MPEG-4 préconise d'utiliser les modulations QPSK (Quadrature Phase-Shift Keying), 8-PSK, 16-APSK ou 32-APSK. La présente invention d'une manière plus générale à toutes les modulations complexes d'une porteuse, c'est-à-dire notamment aux modulations m-QAM (Quadrature Amplitude Modulation) et m-PSK par exemple utilisés dans les standards DVB-S, DVB-C, et DOCSIS.

La plupart des démodulateurs numériques comprennent un dispositif de détection de phase permettant d'aligner une porteuse de référence générée localement par le récepteur avec la phase de l'émetteur de ces signaux. Or depuis sa transmission, un signal transmis subit de nombreuses translations de fréquence générant un bruit de phase qui peut être relativement important. Le bruit de phase comporte généralement des composantes haute fréquence et des composantes basse fréquence. Les composantes basse fréquence du bruit de phase peuvent être compensées en estimant une erreur de phase à partir d'un certain nombre de symboles successifs résultant de l'échantillonnage du signal reçu, corrigés au moins en partie directement ou dans une boucle à verrouillage de phase PLL (Phase-Lock Loop).

Si les symboles transmis ne sont pas connus à l'avance comme en l'absence de symboles pilotes, il n'existe pas de moyen simple d'estimer une erreur de phase ou la phase du signal reçu. Toutefois, dans une boucle à verrouillage de phase une grandeur est estimée pour annuler la valeur moyenne de l'erreur de phase. Cette grandeur peut être estimée symbole par symbole dans la boucle à verrouillage de phase, au moins lorsque l'erreur de phase à estimer est faible, afin d'assurer une convergence de la boucle. En pratique, cette grandeur se compose d'une fonction périodique et impaire de l'erreur de phase et d'un bruit de mesure qui dépend du bruit sur le signal, d'approximations de l'estimateur de la grandeur et surtout du fait que la valeur des symboles est inconnue. C'est pourquoi en général, on ne cherche pas ici à estimer la phase absolue du symbole émis (par exemple en QPSK, les mesures d'erreur sont modulo $\pi/2$)

Classiquement, l'erreur de phase PHE sur un symbole reçu peut être estimée sur la base de la formule suivante :

$$PHE(S) = \Im m\left(S \cdot \tilde{S}^*\right) \qquad (1)$$

dans laquelle $\Im m(X)$ est une fonction donnant la partie imaginaire d'un nombre complexe X, S représente la valeur complexe du symbole reçu et $\tilde{S}^*$ représente la valeur complexe conjuguée d'une estimation du symbole S. Lorsque les symboles sont transmis par une modulation de phase numérique ayant une constellation simple, telle que QPSK ($S = I + jQ$ avec I et Q égaux à + ou -1), la formule (1) se simplifie de la manière suivante :

$$PHE(S) = Q \cdot sign(I) - I \cdot sign(Q) \qquad (2)$$

dans laquelle sign(x) est une fonction égale à +1 ou -1 selon le signe de la variable x.

Toutefois, la formule simplifiée (2) devient inefficace si un bruit relativement important provoque des erreurs de décision quant à la valeur du symbole reçu. Ainsi, dans le cas d'une modulation QPSK, si le symbole reçu présente une partie imaginaire Q proche de 0, l'erreur de phase détectée présente un signe qui a 50% d'être erroné. En outre, le signal à traiter peut être perturbé par des interférences provoquées par une simple porteuse de fréquence constante ou par un signal ayant une puissance plus faible, transmis dans un même canal de transmission que le signal à traiter. De telles interférences peuvent faire diverger la boucle à verrouillage de phase, même en l'absence de tout autre bruit. L'article "Iterative phase recovery method of turbo-coded 16 QAM based on soft symbol to bit mapping" écrit par Peixin Dong. et al., décrit un procédé d'évaluation d'erreur de phase des symboles aux modulations 16 QAM.

D'après la théorie de l'estimation d'un paramètre avec un maximum de vraisemblance, une détection optimale de phase dans une opération de réception de symboles peut être modélisée de la manière suivante :

$$OPD(S) = \frac{\partial}{\partial \theta} Ln(Pr(S|\theta)) \bigg]_{\theta=0} \qquad (3)$$

$P_R(S|\theta)$ étant la probabilité que le symbole S présente une phase égale à $\theta$, Ln étant la fonction logarithme népérien et

$$\left.\frac{\partial}{\partial\theta}X\right]_{\theta=0}$$ est la dérivée de X par rapport à θ au voisinage de θ = 0. Dans la formule (3), Il apparaît que la fonction OPD() peut être entièrement déterminée si l'on connaît la distribution du bruit affectant le symbole, dans le plan complexe.

Généralement, les détections de phase sont réalisées à partir d'approximations de la formule (3), en se basant sur une modélisation de la distribution moyenne du bruit. Selon cette estimation et la complexité de la modulation, on aboutit à une fonction de détection plus ou moins simple. Dans certains cas, la fonction de détection est réalisée à l'aide de tables de correspondance LUT (Look-Up Table) dépendant du bruit, adressées par les composantes I et Q du symbole reçu. Ces tables sont mémorisées dans une mémoire de type ROM, ou RAM si les valeurs des tables doivent être recalculées pour tenir compte de l'évolution de la distribution du bruit. Actuellement, les meilleures détections de phase utilisent des tables de correspondance comportant couramment 16 000 valeurs, même en exploitant une symétrie de révolution apparaissant dans la répartition du bruit dans le plan complexe. La mise en oeuvre de telles tables nécessite donc un temps non négligeable de calcul et de chargement, et une place en mémoire relativement importante.

Dans le cas d'un bruit provoqué par des interférences avec un signal voisin en fréquence, le bruit d'interférence passe d'une manière alternative entre un état en phase et un état déphasé avec le signal reçu. Il en résulte que la table de correspondance doit être recalculée fréquemment, ce qui peut être impossible à des débits de symboles courants, de l'ordre de 20 à 30 MBaud. Il peut alors être envisagé de déterminer un compromis fournissant un résultat acceptable dans tous les cas.

Il est donc souhaitable de pouvoir calculer dans certaines conditions une valeur optimale d'erreur de phase, mettant en oeuvre une table de correspondance de taille sensiblement réduite par rapport aux tables de correspondance couramment utilisées dans les détecteurs de phase.

Un mode de réalisation concerne un procédé de réception d'un signal comprenant une succession de symboles, transmis par une modulation numérique, chaque symbole transmis présentant une amplitude et une phase appartenant à un ensemble de valeurs en nombre fini, le procédé comprenant des étapes d'évaluation d'une erreur de phase sur un symbole reçu, résultant d'un bruit de transmission du signal, de correction de la phase du symbole reçu en fonction de l'erreur de phase évaluée, et de démodulation du symbole corrigé en phase. Selon un mode de réalisation, le procédé comprend une étape de modélisation du bruit de transmission par une composante gaussienne et une composante d'interférence, la composante gaussienne étant non corrélée avec le signal reçu, et entièrement définie par une puissance, la composante d'interférence étant entièrement définie par une amplitude (R) et présentant une phase distribuée sensiblement uniformément, l'erreur de phase du symbole reçu étant évaluée sur la base de la puissance de la composante gaussienne et de l'amplitude de la composante d'interférence.

Selon un mode de réalisation, le procédé comprend une étape d'évaluation de valeurs moyennes de la puissance de la composante gaussienne et de l'amplitude de la composante d'interférence du bruit sur un certain nombre de symboles reçus.

Selon un mode de réalisation, l'erreur de phase du symbole reçu est évaluée par un algorithme de calcul de maximum de vraisemblance basé sur un calcul de dérivée en phase d'une somme de logarithmes de probabilités que la phase du symbole reçu soit égale à chacune des valeurs de l'ensemble fini de phases de la modulation.

Selon un mode de réalisation, l'erreur de phase du symbole reçu est évaluée à l'aide de l'équation suivante :

$$PHE(S) = \frac{\sum_{i=1}^{m}(I \cdot bk - Q \cdot ak) \cdot LUT1[rk]}{\sum_{i=1}^{m}LUT0[rk]}$$

dans laquelle I et Q sont les parties réelle et Imaginaire du symbole reçu, ak et bk sont les parties réelle et imaginaire d'un point de la constellation de modulation comportant m points, rk est la distance dans le plan complexe entre une position du symbole reçu et le point de la constellation, et LUT0[rk] et LUT1[rk] sont des tables de correspondance, la table LUT0[rk] contenant des valeurs approximant une fonction de probabilité qu'une valeur de distance rk soit égale à la distance entre la position du symbole reçu et le point de la constellation, dans la direction d'une droite passant par la position du symbole S et le point Pk, et la table LUT[rk] contenant des valeurs approximant la fonction dérivée de la fonction de probabilité approximée par la table LUT0[rk], divisée par la distance r, à un coefficient de proportionnalité près.

Selon un mode de réalisation, le procédé comprend des étapes d'évaluation de la puissance de la composante gaussienne et de l'amplitude de la composante d'interférence du bruit, à partir d'une séquence de plusieurs centaines de symboles reçus, et d'évaluation des valeurs contenues dans les tables de correspondance en fonction de la puissance de la composante gaussienne et de l'amplitude de la composante d'interférence du bruit évaluées.

Selon un mode de réalisation, les valeurs des tables de correspondance LUT0[r] et LUT1[r] sont évaluées à un coefficient de proportionnalité près à l'aide des équations suivantes :

$$LUT0[r] = I0(u) \cdot \exp(v) \text{ et } LUT1[r] = \frac{1}{\sigma^2}\left[1 - \frac{R^2}{2\sigma^2} \cdot T(u)\right] \cdot LUT0[r]$$

dans lesquelles $u = \dfrac{r \cdot R}{\sigma^2}$, $v = -\dfrac{r^2 + R^2}{2\sigma^2}$, $I0$ I0 est une fonction de Bessel modifiée de la première espèce, $2\sigma^2$ est la puissance de la composante gaussienne du bruit, $T(u) = \dfrac{2}{u} \cdot \dfrac{I1(u)}{I0(u)}$ et I1 est la fonction dérivée par rapport à u de la fonction I0.

Selon un mode de réalisation, le procédé comprend une étape d'évaluation de la puissance de la composante gaussienne $2\sigma^2$ et de l'amplitude R de la composante d'interférence du bruit, à l'aide des équations suivantes :

$$R^2 = \langle B0 \rangle - \langle B1 \rangle \text{ et } 2\sigma^2 = \langle B1 \rangle$$

dans lesquelles $\langle \ \rangle$ représente l'opérateur de moyennage sur une séquence de plusieurs symboles reçus,

$$B0 = \frac{\sum_{k=1}^{m} rk^2 LUT0[rk]}{\sum_{k=1}^{m} LUT0[rk]} \text{ et } B1 = \frac{\sum_{k=1}^{m} rk^2 LUT1[rk]}{\sum_{k=1}^{m} LUT0[rk]}.$$

Selon un mode de réalisation, le procédé comprend une étape de correction d'une valeur de chaque symbole reçu obtenue par démodulation du symbole reçu, l'étape de correction exploitant une table de correspondance utilisée pour l'évaluation d'une erreur de phase sur un symbole reçu, et contenant des valeurs approximant une fonction de probabilité qu'une valeur soit égale à la distance entre la position du symbole reçu et un point de la constellation de modulation.

Un mode de réalisation concerne également un dispositif de réception d'un signal comprenant une succession de symboles, transmis par une modulation numérique, chaque symbole transmis présentant une phase et une amplitude appartenant à un ensemble de valeurs en nombre fini. Selon un mode de réalisation, le dispositif comprend un circuit d'évaluation d'erreur de phase mettant en oeuvre le procédé précédemment défini.

Selon un mode de réalisation, le circuit d'évaluation d'erreur de phase comprend un accès à une première table de correspondance contenant des valeurs approximant une fonction de probabilité qu'une valeur de distance soit égale à la distance entre la position du symbole reçu et un point d'une constellation de la modulation de phase numérique, et un accès à une seconde table de correspondance contenant des valeurs approximant la fonction dérivée de la fonction de probabilité approximée par la première table de correspondance.

Selon un mode de réalisation, le circuit d'évaluation d'erreur de phase comprend des accumulateurs combinés à des additionneurs et des commutateurs pour calculer une première somme de valeurs lues dans la première table de correspondance et pour calculer une seconde somme de valeurs lues dans la seconde table de correspondance pondérées par un coefficient de pondération, les valeurs lues dans les tables de correspondance étant obtenues en fonction de distances entre la position du symbole reçu et chacun des points d'une constellation de la modulation de phase numérique, et des moyens de calcul pour calculer une erreur de phase obtenue en divisant la seconde somme pondérée par la première somme.

Selon un mode de réalisation, le circuit d'évaluation d'erreur de phase comprend un circuit de calcul pour chacun des points d'une constellation de la modulation de phase numérique, chacun des circuits de calcul étant configuré pour déterminer une valeur lue dans la première table de correspondance et une valeur lue dans la seconde table de correspondance, en fonction d'une distance entre la position du symbole reçu et un point d'une constellation de la modulation de phase numérique, et pour multiplier la valeur lue dans la seconde table de correspondance par un coefficient de pondération dépendant de valeurs du symbole reçu et du point de la constellation, le circuit d'évaluation d'erreur de phase comprenant un premier additionneur pour calculer la somme des valeurs lues dans la première table de correspondance, et un second additionneur pour calculer la somme pondérée des valeurs lues dans la seconde table de correspondance.

Selon un mode de réalisation, le circuit d'évaluation d'erreur de phase comprend un circuit de calcul de deux quantités utilisant les valeurs lues dans les tables de correspondance, et un circuit de calcul de valeurs moyennes des deux quantités sur une séquence de plusieurs centaines de symboles reçus, d'estimation de la puissance de la composante gaussienne et de l'amplitude de la composante d'interférence, et de calcul et mise à jour des valeurs des tables de correspondance.

Selon un mode de réalisation, le dispositif comprend un démodulateur pour démoduler les symboles corrigés en phase à partir de l'erreur de phase évaluée par le circuit d'évaluation d'erreur de phase, le démodulateur recevant les valeurs lues dans la première table de correspondance pour corriger la valeur des symboles démodulés.

Un autre mode de réalisation concerne un système de transmission par une modulation numérique d'un signal comprenant une succession de symboles, chaque symbole transmis présentant une phase et une amplitude appartenant à un ensemble de valeurs en nombre fini. Selon un mode de réalisation, le système comprend le dispositif de réception défini précédemment, pour recevoir le signal transmis.

Des exemples de réalisation de l'invention seront décrits dans ce qui suit, à titre non limitatif en relation avec les figures jointes parmi lesquelles :

- la figure 1 représente schématiquement un récepteur de signaux numériques,
- la figure 2 représente un exemple de constellation de points d'une modulation numérique,
- la figure 3 représente un autre exemple de constellation de points d'une modulation numérique montrant des symboles reçus,
- la figure 4 représente schématiquement un circuit d'évaluation d'erreur de phase dans un signal reçu, selon un mode de réalisation,
- la figure 5 représente schématiquement un circuit d'évaluation d'erreur de phase dans un signal reçu, selon un autre mode de réalisation,
- la figure 6 représente un module du circuit d'évaluation d'erreur de la figure 2 ou 3,
- la figure 7 représente schématiquement un circuit d'évaluation d'erreur de phase dans un signal reçu, selon un autre mode de réalisation,
- la figure 8 représente schématiquement un circuit d'évaluation d'erreur de phase dans un signal reçu, selon un autre mode de réalisation.

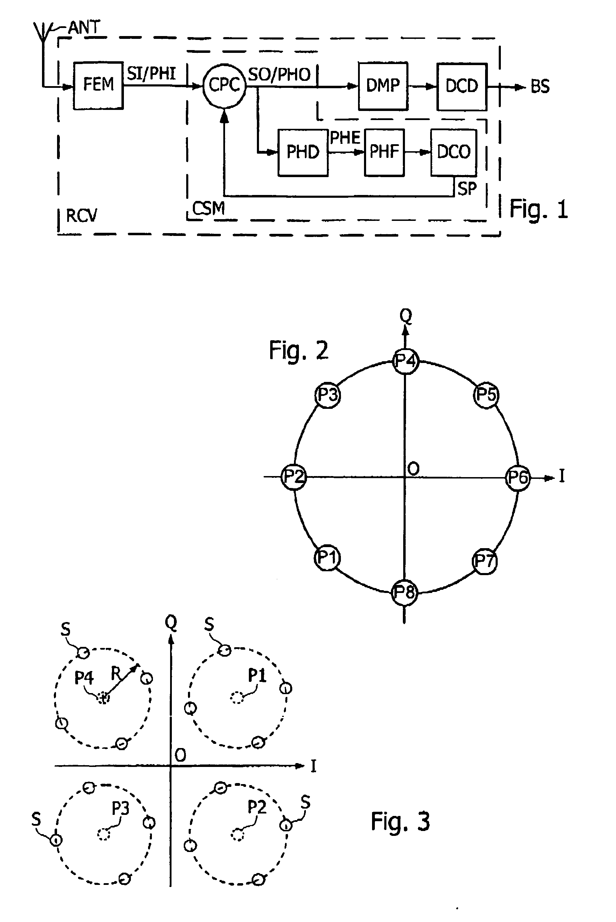

La figure 1 représente un récepteur de signaux numériques modulés en phase. Sur la figure 1, le récepteur RCV comprend un module d'entrée FEM, un module de synchronisation avec une porteuse CSM, un module de démodulation (ou demapper) DMP, et un module de correction d'erreur DCD. Le module FEM est connecté à une antenne de réception ANT de signaux numériques. Le module FEM convertit le signal reçu en bande de base, et échantillonne le signal en bande de base en une succession de symboles SI comportant chacun une composante réelle et une composante imaginaire, correspondant à une phase d'entrée PHI. Le module FEM fournit au module CSM les symboles SI obtenus.

Le module CSM comprend un module de correction de phase CPC recevant les symboles SI du module FEM. Le module CPC fournit pour chaque symbole reçu SI un symbole SO dont la phase PHO est corrigée en tenant compte d'une erreur de phase. A cet effet, le module CPC reçoit également un signal de correction de phase SP. Le module CSM comprend un circuit d'évaluation d'erreur de phase PHD déterminant une erreur de phase Instantanée PHE sur chaque symbole SO. L'erreur de phase PHE est filtrée par un filtre PHF, puis fournie à l'entrée d'un oscillateur commandé numériquement DCO. L'oscillateur DCO fournit au module CPC le signal de correction de phase SP ayant pour phase l'erreur de phase filtrée.

Le module DMP réalise une démodulation des symboles corrigés en phase SO fournis par le module CSM en convertissant chaque symbole reçu en un code numérique. Le module DCD convertit par un algorithme de correction d'erreur chaque code de symbole et fournit un flux binaire BS correspondant aux informations transmises.

Dans la description qui suit, les circuits d'évaluation d'erreur de phase se basent sur une modélisation du bruit de transmission comprenant une composante de bruit gaussien ou composante gaussienne, et une composante d'interférence provoquant des interférences avec le signal reçu. La composante gaussienne qui peut être par exemple un bruit gaussien, présente une phase ayant une distribution sensiblement uniforme et non corrélée aux symboles reçus. La composante gaussienne peut donc être entièrement caractérisée par une distribution radiale (à symétrie par rapport à l'origine du plan complexe), définie par une valeur de variance ou de puissance $2\sigma^2$ ($\sigma^2$ étant la variance ou la puissance de chacune des parties réelle et imaginaire de la composante gaussienne). La composante d'interférence est un signal de fréquence fixe proche de celle du signal à traiter, qui peut avoir subi une modulation de type n-PSK, dont les symboles sont en phase avec l'échantillonnage du signal reçu, et avec une phase aléatoire par rapport à la phase de la porteuse du signal reçu. La composante d'interférence est donc entièrement définie par son amplitude R.

Le signal transmis est modulé par une modulation numérique comportant une constellation de N points. La figure 2 représente un exemple de constellation de points d'une modulation numérique. La figure 2 représente en particulier la constellation de points d'une modulation de type 8-PSK comprenant des points P1 à P8 répartis sur un cercle centré sur l'origine O du plan complexe.

La figure 3 représente un autre exemple de constellation de points d'une modulation numérique de type QPSK. Cette constellation comprend quatre points P1, P2, P3, P4, situés à égales distances de l'origine O du plan complexe et correspondant à des phases égales à + et -$\pi$/4. et + et -3$\pi$/4.

La figure 3 illustre le cas où la transmission de symboles est soumise à une composante de bruit d'interférence d'amplitude R, en phase avec l'échantillonnage du signal reçu en symboles. Les symboles reçus S peuvent alors se trouver sur des cercles de rayon égal à l'amplitude R de la composante d'interférence, centrés sur les points P1 à P4 de la constellation. Si les symboles de la composante d'interférence ne sont pas en phase avec l'échantillonnage du signal reçu, les symboles reçus se trouvent dans des nuages de points centrés sur les points P1 à P4. Dans cette situation, la composante d'interférence peut être approximée par une composante d'interférence d'amplitude plus faible et une composante de bruit gaussien supplémentaire dont la puissance s'ajoute à celle de la composante gaussienne.

Dans le cas ou un symbole reçu S correspond à un symbole émis Se inconnu et présente une erreur de phase $\theta$, le calcul optimal de l'erreur de phase peut être réalisé à l'aide de l'équation suivante :

$$PHE(S) = \frac{\left[\sum_{k=1}^{m} \frac{\partial}{\partial\theta} Pr(S|\theta, Se = Pk) \cdot Pr(Se = Pk)\right]_{\theta=0}}{\left[\sum_{k=1}^{m} Pr(S|\theta, Se = Pk) \cdot Pr(Se = Pk)\right]_{\theta=0}} \qquad (4)$$

dans laquelle Pr(S|$\theta$,Se = Pk) est la probabilité que le symbole S soit transmis avec l'erreur de phase $\theta$ et corresponde au symbole émis Se égal à l'un des points Pk de la constellation d'une modulation numérique présentant une constellation de m points, et Pr(Se = Pk) est la probabilité que le symbole émis Se soit égal au point Pk. Dans la plupart des cas, les symboles émis présentent la même probabilité. Il en résulte que la formule précédente se simplifie de la manière suivante ;

$$PHE(S) = \frac{\left[\sum_{k=1}^{m} \frac{\partial}{\partial\theta} Pr(S|\theta, Se = Pk)\right]_{\theta=0}}{\sum_{k=1}^{m} Pr(S|0, Se = Pk)} \qquad (5)$$

Lorsque le bruit est gaussien, la probabilité de recevoir un symbole S lorsqu'un symbole P est transmis dépend uniquement de la distance entre les symboles S et P dans le plan complexe. Or dans le plan complexe où la constellation de modulation est centrée sur le point origine O, la distance R entre les symboles P et S peut s'exprimer par l'équation suivante :

$$r^2 = PS^2 = OP^2 + OS^2 - 2OP \cdot OS \cos(\varphi - \alpha - \theta) \qquad (6)$$

dans laquelle $\varphi$ est l'argument de S, $\alpha$ celui de P et $\theta$ l'erreur de phase. En dérivant l'expression précédente par rapport à l'erreur de phase $\theta$, on obtient la relation suivante :

$$r \frac{\partial r}{\partial \theta} = OP \cdot OS \cdot \sin(\varphi - \alpha - \theta) \qquad (7)$$

Il en résulte la relation suivante entre la dérivée du logarithme de la probabilité Pr(r) par rapport à l'erreur de phase $\theta$ et la dérivée de ce même logarithme par rapport à r :

$$\frac{\partial}{\partial\theta}\left[Ln(Pr(r))\right]_{\theta=0} = \frac{\frac{\partial}{\partial r}Pr(r)}{Pr(r)}\frac{\partial(r)}{\partial\theta}\Bigg]_{\theta=0} = \frac{OP\cdot OS\cdot\sin(\varphi-\alpha)}{r}\cdot\frac{\frac{\partial}{\partial r}Pr(r)}{Pr(r)} \quad (8)$$

Si l'on pose a=OP·cosα, b=OP·sinα, | = OS · cosφ et Q=OS·sinφ (a et b étant les coordonnées cartésiennes du point P dans le plan complexe et I et Q étant les coordonnées cartésiennes du point S dans ce plan), on obtient finalement :

$$\frac{\partial}{\partial\theta}Ln(Pr(r))\Bigg]_{\theta=0} = \frac{(Q\cdot a-I\cdot b)}{r}\cdot\frac{\partial}{\partial r}Ln(Pr(r)) \quad (9)$$

Si l'on approxime les fonctions Ln(Pr(r)) et $\dfrac{1}{r}\cdot\dfrac{\partial}{\partial r}Pr(r)$ par des tables de correspondance LUT0 et LUT1, on obtient:

$$PHE(S) = \frac{\sum_{i=1}^{m}(I\cdot bk - Q\cdot ak)\cdot LUT1[rk]}{\sum_{i=1}^{m}LUT0[rk]} \quad (10)$$

Il est à noter ici que les tables LUT0 et LUT1 peuvent être définies avec un coefficient proportionnel arbitraire indépendant de r, ce coefficient agissant uniquement sur la boucle de verrouillage de phase PLL (Figure 1). Les valeurs des tables LUT0 et LUT1 peuvent être déterminées par apprentissage sur une séquence de symboles connus.

Selon un autre mode de réalisation, le contenu des tables peut être déterminé de la manière suivante. Compte tenu de la modélisation du bruit décrite précédemment, lorsqu'un symbole P est transmis, il est reçu avec une composante de bruit gausslen de puissance $2\sigma^2$ et une composante de bruit d'interférence égale à R·exp(jγ), γ étant l'argument de cette composante. La probabilité de recevoir un symbole S pour un symbole émis P peut donc s'exprimer de la manière suivante :

$$Pr(S|P,\gamma) = \frac{1}{2\pi.\sigma^2}\exp(-\frac{|S-P-R\cdot\exp(j\gamma)|^2}{2\sigma^2}) \quad (11)$$

Puisque l'argument γ de la composante d'interférence est inconnu, mais est supposé uniforme, la probabilité Pr(S|P,γ) peut être Intégrée sur toutes les valeurs possibles de γ, pondérée par sa densité de probabilité égale à 1/2π. Il en résulte que :

$$Pr(S|P) = \frac{1}{2\pi}\int_0^{2\pi}\frac{1}{2\pi\sigma^2}\cdot\exp(-\frac{1}{2\sigma^2}\cdot|S-P-R\cdot\exp(j\gamma)|^2)\cdot d\gamma \quad (12)$$

Si l'on pose |S - P| = r, on obtient :

$$Pr(S|P) = \frac{1}{2\pi}\int_0^{2\pi}\frac{1}{2\pi\sigma^2}\exp\left(-\frac{1}{2\sigma^2}\cdot(r^2+R^2-2R\cdot r\cdot\cos(\gamma))\right)\cdot d\gamma \quad (13)$$

Or la fonction $I0(x) = \dfrac{1}{2\pi} \displaystyle\int_0^{2\pi} \exp(x \cdot \sin(\gamma)) \cdot d\gamma$ est une fonction de Bessel modifiée de la première espèce.

Il en résulte que :

$$Pr(S|P) = Pr(r) = \frac{1}{2\pi\sigma^2} \cdot I0(u) \cdot \exp(v) \qquad (14)$$

et

$$\frac{\partial Pr(r)}{\partial r} = \frac{1}{2\pi\sigma^2}\left(\frac{R}{\sigma^2}I1(u) - \frac{r}{\sigma^2}I0(u)\right) \cdot \exp(v) \qquad (15)$$

dans laquelle $u = \dfrac{r \cdot R}{\sigma^2}$, $v = -\dfrac{r^2 + R^2}{2\sigma^2}$ et I1(u) est la fonction dérivée de la fonction I0(u) par rapport à u. L'erreur de phase peut ensuite être déduite des relations (5), (9), (14) et (15), de la manière suivante :

$$PHE(S) = \frac{\sum_k \left[ (I \cdot bk - Q \cdot ak) \cdot \frac{1}{\sigma^2} \cdot \left(I0(uk) - \frac{R}{rk} \cdot I1(uk)\right) \cdot \exp(vk) \right]}{\sum_k \left[ I0(uk) \cdot \exp(vk) \right]} \qquad (16)$$

dans laquelle $uk = \dfrac{rk \cdot R}{\sigma^2}$, $vk = -\dfrac{rk^2 + R^2}{2\sigma^2}$ et la somme $\displaystyle\sum_k$ porte sur tous les points de la constellation de modulation utilisée pour transmettre le signal reçu;

Il en résulte que les valeurs des tables LUT0 et LUT1 de la formule (10) peuvent être calculées de la manière suivante :

$$LUT0[r] = I0(u) \cdot \exp(v) \qquad (17)$$

$$LUT1[r] = \frac{1}{\sigma^2}\left[1 - \frac{R^2}{2\sigma^2} \cdot T(u)\right] \cdot LUT0[r] \qquad (18)$$

dans lesquelles $u = \dfrac{r \cdot R}{\sigma^2}$, $v = -\dfrac{r^2 + R^2}{2\sigma^2}$ et $T(u) = \dfrac{2}{u} \cdot \dfrac{I1(u)}{I0(u)}$.

La table LUT0 contient ainsi pour chaque valeur r d'un ensemble de valeurs de distance possibles, une valeur proportionnelle à la fonction de probabilité Pr que cette valeur r corresponde à la distance entre la position du symbole reçu S et un point considéré P de la constellation dans la direction d'une droite passant par les points S et P. La table LUT1 contient des valeurs approximant la fonction dérivée de la fonction de probabilité approximée par la table LUT0[r], divisée par la distance r, à un coefficient de proportionnalité près.

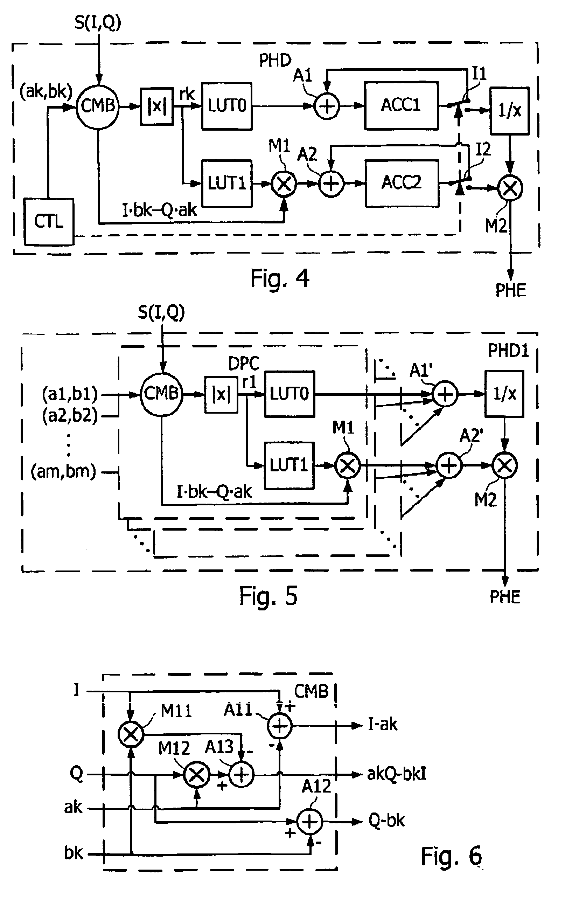

La figure 4 représente un mode de réalisation du circuit d'évaluation d'erreur de phase PHD d'un signal modulé en m-PSK (m-states Phase-Shift Keying) ou m-APSK (m-states Amplitude and Phase Shift Keying). Le signal reçu est préalablement échantillonné en une succession de symboles S(I,Q) pouvant chacun correspondre à un symbole émis correspondant à un point d'une constellation de modulation à m points P1, P2, ..., Pm de coordonnées cartésiennes dans le plan complexe (a1, b1), (a2, b2), ... (am, bm). Le circuit PHD calcule ainsi l'erreur de phase PHE d'un symbole reçu S(I,Q) en appliquant la formule (10). A cet effet, le circuit PHD comprend un module de combinaison CMB combinant de différentes manières les composantes réelle I et imaginaire Q du symbole reçu S avec les composantes réelle ak et imaginaire bk d'un point Pk de la constellation. Le circuit PHD comprend un module |x| de calcul d'une distance rk entre le symbole reçu S et le point Pk de la constellation dans le plan complexe. Le module |x| reçoit du module CMB par exemple les valeurs x = I - ak et y = Q - bk et calcule la distance rk par la formule suivante :

$$rk = \sqrt{x^2 + y^2} \qquad\qquad (19)$$

Le module |x| peut être approximé par une fonction linéaire par intervalle.

La distance rk fournie par le module est utilisée pour adresser deux tables de correspondance LUT0 et LUT1 qui fournissent respectivement des valeurs LUT0[rk] et LUT1[rk]. La valeur LUT0[rk] est appliquée à un additionneur A1. Le module CMB fourni également la quantité (I·bk-Q·ak) à un multiplieur M1 qui reçoit par ailleurs la valeur LUT1 [rk]. Le multiplieur M1 fournit la quantité (I·bk~Q·ak). LUT1(rk) à un additionneur A2. Les sorties des additionneurs A1, A2 sont connectées à des accumulateurs ACC1, ACC2, par exemple comprenant chacun un registre. La sortie de chacun des accumulateurs ACC1, ACC2 est connectée à un commutateur I1, I2. Le commutateur I1 permet de diriger la sortie de l'accumulateur ACC1 soit vers une entrée de l'additionneur A1, soit vers un inverseur 1/x. Le commutateur I2 permet de diriger la sortie de l'accumulateur ACC2 soit vers une entrée de l'additionneur A2, soit vers un multiplieur M2. L'inverseur 1/x peut mettre en oeuvre une table de correspondance entre des valeurs de x appartenant à un intervalle et des valeurs de x inversées 1/x, seul un intervalle étroit étant nécessaire si l'on utilise une représentation en virgule flottante.

Le circuit PHD comprend également un module de contrôle CTL qui fournit successivement les coordonnées cartésiennes (ak,bk) de tous les points Pk de la constellation de modulation au module CMB, et commande les commutateurs I1, I2, pour reboucler la sortie des accumulateurs ACC1, ACC2 sur les additionneurs A1, A2. Lorsque les coordonnées (ak,bk) de tous les points Pk de la constellation de modulation ont été transmis au module CMB, le module CTL commande les commutateur I1, I2 pour fournir les valeurs accumulées dans les accumulateurs ACC1, ACC2 à l'inverseur 1/x et au multiplieur M2. La sortie de l'inverseur 1/x est connectée à une entrée du multiplieur M2 qui fournit en sortie une valeur d'erreur de phase PHE pour chaque symbole S reçu.

Les tables LUT0 et LUT1 comportent typiquement 50 à 100 valeurs sur la totalité de la bande utile qui dépend de la distribution du bruit dans le plan complexe. Pour les constellations présentant un grand nombre de points (8, 16 et 32), les sommes peuvent être limitées aux points de la constellation (par exemple 4) situés le plus proche du symbole reçu S.

Il est à noter que le circuit PHD est adapté si les sommes $\sum_k (I\cdot bk - Q\cdot ak)\cdot LUT1(rk)$ et $\sum_k LUT0(rk)$ fournies par les accumulateurs ACC1, ACC2 associés aux additionneurs A1, A2, peuvent être calculées en un temps inférieur à la période d'échantillonnage du signal reçu en symboles. Dans le cas contraire, il peut être envisagé de calculer en parallèle les termes de ces sommes. Ainsi, la figure 5 représente un circuit d'évaluation d'erreur de phase PHD1 selon un autre mode de réalisation. Sur la figure 5, les éléments déjà présents dans la figure 4 portent les mêmes signes de référence. Le circuit d'évaluation d'erreur de phase PHD1 diffère du circuit PHD en ce qu'il comprend un module de calcul DPC pour chaque terme de ces deux sommes, c'est-à-dire pour chaque point Pk de la constellation de la modulation du signal à recevoir, deux additionneurs A1', A2', l'inverseur 1/x comprenant une entrée connectée à la sortie de l'additionneur A1', et le multiplieur M2 comprenant une entrée connectée à la sortie de l'inverseur 1/x et à la sortie de l'additionneur A2'. Chaque module DPC comprend les modules de combinaison CMB et |x|, un accès aux tables LUT0 et LUT1 et le multiplieur M1. Le module CMB de chaque module DPC reçoit la valeur du symbole S(I,Q) et les coordonnées cartésiennes (a1,b1), (a2,b2), ... (am,bm) d'un point respectif P1, P2, ... Pm des m points de la constellation de modulation. La sortie de la table LUT0 de chacun des modules DPC est connectée à une entrée de l'additionneur A1'. De même la sortie du multiplieur M1 de chacun des modules DPC est connectée à une entrée de l'additionneur A2'. La sortie du multiplieur M2 fournit une valeur d'erreur de phase PHE pour le symbole reçu S.

La figure 6 représente un exemple de réalisation du module CMB représenté sur la figure 4 ou 5. Le module CMB comprend des multiplieurs M11, M12 et des additionneurs A11, A12, A13. Le multiplieur M11 reçoit la partie réelle I du symbole S et la partie imaginaire bk du point Pk. L'additionneur A11 retranche la partie réelle ak du point Pk de la partie réelle I et fournit donc la quantité (I - ak). L'additionneur A12 retranche la partie imaginaire bk de la partie imaginaire Q du symbole S et fournit donc la quantité (Q - bk). Le multiplieur M12 reçoit la partie imaginaire Q et la partie réelle ak. La sortie du multiplieur M12 est retranchée de la sortie du multiplieur M11 dans l'additionneur A13 qui fournit donc la quantité (I·bk - Q·ak).

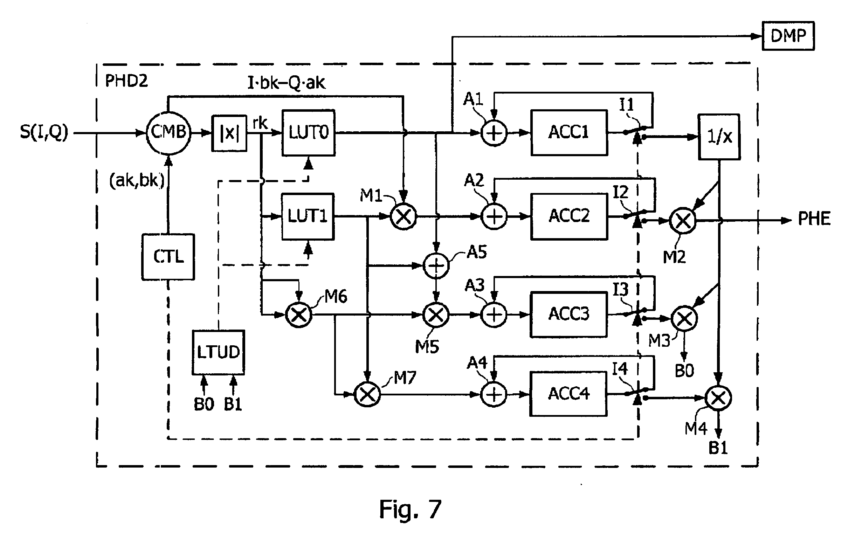

La figure 7 représente un circuit d'évaluation d'erreur de phase selon un autre mode de réalisation. Les éléments de la figure 7 qui sont identiques à ceux de la figure 4 portent les mêmes signes de référence. Sur la figure 7, le circuit d'évaluation d'erreur de phase PHD2 diffère de celui de la figure 4 en ce qu'il comprend des circuits permettant d'évaluer les paramètres de modélisation du bruit $R^2$ et $2\sigma^2$ pour le symbole S(I,Q). Ces circuits comprennent des multiplieurs M3 à M7, des additionneurs A3 à A5, deux accumulateurs ACC3, ACC4, et deux commutateurs 13, 14. Les sorties des tables LUT0 et LUT1 sont connectées aux entrées de l'additionneur A5 dont une sortie est connectée à une entrée du multiplieur M5. La sortie du module |x| est connectée aux deux entrées du multiplieur M6 dont la sortie est connectée à une entrée des multiplieurs M5 et M7. La sortie du multiplieur M5 est connectée à l'entrée de l'additionneur A3. La sortie du multiplieur M7 est connectée à l'entrée de l'additionneur A4. Les sorties des additionneurs A3, A4 sont connectées à des accumulateurs ACC3, ACC4. La sortie de chacun des accumulateurs ACC3, ACC4 est connectée à l'un des commutateurs 13, 14. Le commutateur I3 permet de diriger la sortie de l'accumulateur ACC3 soit vers une entrée de l'additionneur A3, soit vers le multiplieur M3. De même, le commutateur I4 permet de diriger la sortie de l'accumulateur ACC4 soit vers une entrée de l'additionneur A4, soit vers le multiplieur M4.

Le module de contrôle CTL du circuit PHD2 fournit successivement les valeurs de tous les points Pk(ak,bk) de la constellation au module CMB et le signal de commande des commutateurs I1, I2 est appliqué également aux commutateurs I3 et 14 pour reboucler la sortie des accumulateurs ACC1, ACC2, ACC3 et ACC4 sur les additionneurs A1, A2, A3 et A4 tant qu'un nouveau point Pk(ak, bk) est fourni au module CMB, et pour fournir les valeurs accumulées dans les accumulateurs ACC1, ACC2, ACC3, ACC4 respectivement à l'inverseur 1/x et aux multiplieurs M2, M3, M4 lorsque les coordonnées cartésiennes de tous les points Pk(ak,bk) de la constellation de modulation ont été fournis au module CMB. La sortie de l'inverseur 1/x est connectée à une entrée des multiplieurs M3 et M4 qui fournissent en sortie des quantités B0 et B1. Les quantités B0 et B1 permettent d'évaluer les paramètres du bruit $R^2$ et $2\sigma^2$ de la manière suivante :

$$R^2 \approx \langle B0 \rangle - \langle B1 \rangle \qquad (20)$$

$$2\sigma^2 = \langle B1 \rangle \qquad (21)$$

dans lesquelles $\langle\,\rangle$ représente l'opérateur de moyennage,

$$B0 = \frac{\sum_{k=1}^{m} rk^2 LUT0[rk]}{\sum_{k=1}^{m} LUT0[rk]} \text{ et } B1 = \frac{\sum_{k=1}^{m} rk^2 LUT1[rk]}{\sum_{k=1}^{m} LUT0[rk]}.$$

En effet, il peut être démontré par une recherche de maximum d'une probabilité de détecter une certaine séquence de N symboles reçus, que les tables LUT0 et LUT1 peuvent permettre d'évaluer l'amplitude R du signal d'interférence et la variance du bruit $\sigma^2$ grâce aux équations suivantes :

$$R^2 = \left\langle \frac{\sum_{k} rk^2 (LUT0[rk] - LUT1[rk])}{\sum_{k} LUT0[rk]} \right\rangle \qquad (22)$$

$$2\sigma^2 = \left\langle \frac{\sum_{k} rk^2 \cdot LUT1[rk]}{\sum_{k} LUT0[rk]} \right\rangle \qquad (23)$$

Ces équations ont été obtenues en calculant les dérivées de la fonction de probabilité par rapport à l'amplitude R et la puissance $\sigma^{-2}$, et en recherchant les valeurs de R et $\sigma^{-2}$ qui annulent ces dérivées.
L'amplitude R du signal d'interférence et la variance du bruit $2\sigma^2$ peuvent ainsi être réévalués de manière récursive en calculant une moyenne des quantités B0 et B1 sur un certain nombre de symboles. A chaque fois que les valeurs $R^2$ et $2\sigma^2$ sont évaluées, les valeurs mémorisées dans les tables LUT0 et LUT1 peuvent être recalculées à partir des équations (17) et (18). Le circuit PHD2 comprend à cet effet un circuit de calcul LTUD des valeurs des tables de correspondance LUT0 et LUT1. Le circuit LTUD-reçoit les valeurs B0 et B1, en calcule des valeurs moyennes $\langle B0 \rangle$ et $\langle B1 \rangle$ par exemple sur 200 à 1000 symboles, en déduit des estimations de la variance $2\sigma^2$ et du carré de l'amplitude $R^2$, puis calcule les valeurs des tables LUT0 et LUT1 et les met à jour. Le calcul de la variance $2\sigma^2$ et du carré de l'amplitude $R^2$, puis des valeurs des tables LUT0 et LUT1 peut ainsi être effectué périodiquement, à chaque fois que le nombre de symboles reçu est suffisant pour le calcul des valeurs moyennes $\langle B0 \rangle$ et $\langle B1 \rangle$. Les valeurs initiales de $2\sigma^2$ et $R^2$ peuvent être choisies arbitrairement, en évitant de choisir R égal à 0 qui est une solution triviale des équations de détermination de R et $2\sigma^2$. En pratique, l'amplitude R et la puissance $2\sigma^2$ sont initialisés à des valeurs typiques, c'est-à-dire R est fixée à une valeur minimum et $2\sigma^2$ est fixée à une valeur probable. Durant les calculs, l'amplitude R peut être maintenue à une valeur supérieure à $\sigma/8$ par exemple, pour éviter d'atteindre la valeur 0. De même la puissance $2\sigma^2$ peut être maintenue dans une plage de valeurs probables afin de simplifier les approximations. Après un petit nombre d'itérations, il peut être constaté que l'amplitude R et la puissance $2\sigma^2$ atteignent des valeurs sensiblement optimales. Le circuit PHD2 est ainsi auto adaptatif en étant configuré pour suivre automatiquement l'évolution du bruit affectant la transmission du signal reçu.

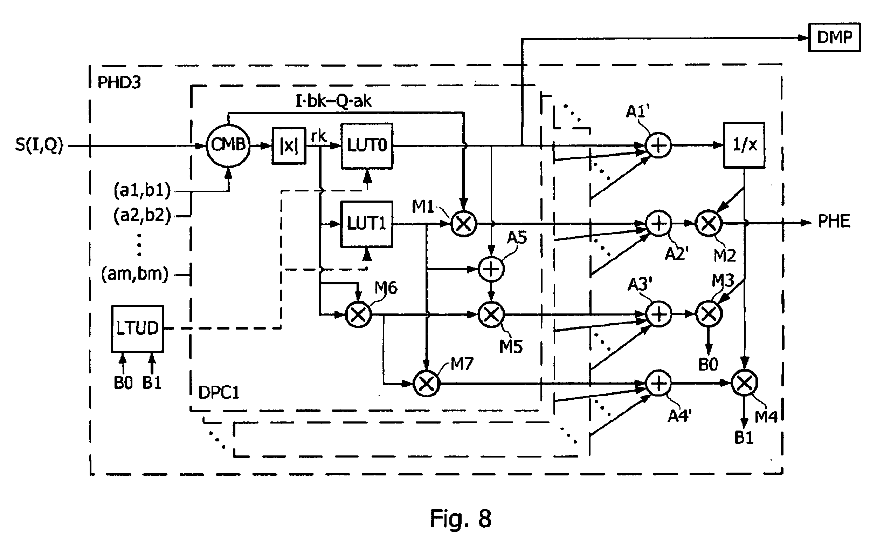

Comme pour le circuit PHD, si les sommes fournies par les accumulateurs ACC1 à ACC4 ne peuvent pas être obtenues en un temps inférieur à la durée de réception d'un symbole S, les termes de ces sommes peuvent être calculés en parallèle comme représenté sur la figure 8. Sur la figure 8, les éléments déjà présents sur la figure 6 portent les mêmes signes de référence. La figure 8 représente un circuit d'évaluation d'erreur de phase PHD3 comprenant un module de calcul DPC1 pour chaque terme des quatre sommes fournies par les accumulateurs ACC1 à ACC4, et quatre additionneurs A1', A2', A3', A4'. L'entrée du module 1/x est connectée à la sortie de l'additionneur A1'. La sortie du module 1/x est connectée à une entrée de chacun des multiplieurs M2, M3, M4. Une autre entrée de chacun des multiplieurs M2, M3, M4 est connectée à la sortie d'un des additionneurs A2', A3', A4'. Les sorties des multiplieurs M3 et M4 fournissent respectivement les quantités B0 et B1.

Le calcul des valeurs des tables LUT0 et LUT1 peut être réalisé à l'aide de moyens de calcul simples pouvant utiliser des opérations en virgule flottante avec une mantisse de relativement petite taille (par exemple de 8 à 10 bits). En effet, à partir des valeurs de $R^2$ et $\sigma^2$ obtenues à partir des quantités $\langle B0 \rangle$ et $\langle B1 \rangle$, les valeurs de R et $1/\sigma^2$ peuvent être évaluées à l'aide de petites tables de correspondance (64 à 256 valeurs suffisent). Ensuite les valeurs $R/\sigma^2$ et $R^2/\sigma^2$ peuvent être calculées, ce qui permet de calculer la quantité $u = r \cdot R/\sigma^2$ pour r variant de 0 à 100 par exemple. Pour les faibles valeurs de u, I0(u) et T(u) peuvent être approximées en utilisant un développement limité de ces fonctions en u. Pour les valeurs élevées de u, la fonction I0 peut être approximée par une fonction égale à $\exp(u)/\sqrt{2\pi u}$, la différence étant développée en puissance négative de u. La fonction exponentielle exp() est calculée à l'aide de l'équation $\exp(x) = 2^{x/\ln 2}$, en effectuant une multiplication préalable de la variable x par $1/\ln 2$. La partie entière de $x/\ln 2$ donne ainsi l'exposant, tandis qu'une table à 256 entrées par exemple, adressée par la partie fractionnaire de ce nombre donne la mantisse.

Ainsi, les approximations suivantes peuvent par exemple être appliquées ; si $u < 7/4$ (faibles valeurs de u) alors

$$LUT0[r] = (1 + c1a \cdot u^2 + c2a \cdot u^4) \cdot \exp[-(R^2 + r^2)/(2\sigma^2)]$$

$$LUT1[r] = 1/\sigma^2 \cdot [1 - R^2/(2\sigma^2) \cdot (1 + c1c \cdot u^2 + c2c \cdot u^4)] \cdot LUT0[r]$$

Sinon (faibles valeurs de 1/u)

$$LUT0[r] = (1 + c1b/u + c2b/u^2)/\sqrt{u} \cdot \exp[-(R^2 - r^2)/(2\sigma^2)] - 0.5 \cdot \ln(2\pi)$$

$$LUT1[r] = 1/\sigma^2 \cdot [1 - R^2/(2\sigma^2) \cdot (1/u + c1d/u^2 + c2d \cdot u^3)] \cdot LUT0[r]$$

Si les calculs sont effectués avec une mantisse sur 10 bits, les coefficients utilisés dans le calcul des tables LUT0 et LUT1 présentent les valeurs suivantes :

c1a=256/1024   c1c=-128/1024

(suite)

c2a=1711024    c2c=14/1024
c1b=125/1024    c1d=512/1024
c2b=112/1024    c2d=-204/1024

Il est à noter que l'algorithme à la base du fonctionnement du circuit d'évaluation d'erreur de phase ne dépend pas de la constellation, c'est-à-dire du type de modulation numérique du signal à traiter. Il en résulte que ce circuit est adapté pour traiter tous les signaux conformes à la norme DVB-S2, ceux-ci étant susceptibles d'être modulés par différents types de modulation numérique (QPSK, 8-PSK, 16-APSK ou 32-APSK). En effet, la seule adaptation à effectuer porte sur le nombre et les coordonnées des points Pk(ak, bk) de la constellation de modulation. Mis à part la définition de la constellation, cet algorithme ne fait pas intervenir d'autres paramètres liés à la modulation ou à la modélisation du bruit. Cet algorithme s'avère optimum dans le cas où le bruit subi par le signal à traiter ne comporte qu'une composante de bruit gaussien et qu'une composante de bruit d'interférence à amplitude R constante. Cet algorithme s'avère également robuste en acceptant des valeurs de rapport porteuse sur bruit avec interférence CNIR (Carrier-to-Noise plus Interference Ratio) relativement faibles. Cet algorithme présente également l'avantage d'offrir une bonne précision (environ 0,1 dB) dans l'estimation d'un symbole, et d'utiliser relativement peu de moyens de calcul et de moyens de stockage (une centaines de valeurs dans chacune des tables LUT0 et LUT1 dans le cas du standard DVB-S2).

Par ailleurs, dans le démodulateur DMP, les symboles démodulés sont généralement traités par un dispositif de correction d'erreur tel qu'un dispositif de type codes convolutifs associé à un décodeur de Viterbi, un dispositif à turbo codes ou LDPC (Low-Density Parity-Check code). Un tel dispositif de correction d'erreur peut être basé sur un calcul de logarithme d'un rapport de vraisemblance LLR (Log Likellhood Ratio). Le logarithme du rapport de vraisemblance de la valeur d'un bit b(i) d'un symbole reçu LLR[b(i)] peut être défini de la manière suivante :

$$LLR\big[b(i)\big] = \ln\big(Pr(b(i) = 1)\big) - \ln\big(Pr(b(i) = 0)\big) \qquad (24)$$

dans laquelle Pr(b(i) = 1) est la probabilité que le bit b(i) soit égal à 1 et Pr(b(i) = 0) est la probabilité que le bit b(i) soit égal à 0. La fonction LLR peut être approximée en supposant par exemple que la transmission a subi un bruit Gausslen le plus défavorable. SI le bruit ayant affecté la transmission n'est pas Gaussien, la correction est alors sous optimale.

Or les calculs de probabilité sur la valeur des symboles ont été effectués dans les circuits d'évaluation d'erreur de phase PHD, PHD1, PHD2, PD3 décrits précédemment. Il suffit donc d'ajouter dans le dispositif de correction d'erreur du module DMP un circuit d'évaluation des probabilités Pr(b(i) = 1) et Pr(b(i) = 0) qui ne comporte que des accumulateurs exploitant la table LUT0, un calcul de logarithme népérien et une soustraction. A cet effet, la sortie de la table LUT0 dans le circuit d'évaluation d'erreur de phase PH2, PH3, peut être reliée au module DMP, comme représenté sur les Figures 7 et 8, et il peut être prévu une petite table de correspondance pour le calcul de logarithme.

La présente invention est définie par les revendications 1-15.

Il apparaîtra clairement à l'homme de l'art que la présente invention n'est pas limitée à la mise en oeuvre des équations présentées précédemment. En effet, d'autres équations peuvent être développées à partir de la modélisation du bruit utilisée. En outre, le contenu des tables LUT0 et LUT1 dans l'équation (10) peut être obtenu de diverses manières, et pas nécessairement en utilisant les équations (17) et (18). En effet, les tables LUT et LUT1 peuvent par exemple être remplies ou réévaluées à la suite de périodes d'apprentissage durant lesquelles des symboles de valeurs connues sont transmis.

Par ailleurs, les différents calculs d'évaluation d'erreur de phase effectués peuvent être réalisés en logique câblée comme dans les circuits présentés dans les figures 4 à 8 ou par un processeur suffisamment rapide pour fournir une évaluation de l'erreur de phase en temps réel, c'est-à-dire à la cadence de la réception des symboles. Les autres calculs de mise à jour des tables LUT0 et LUT1 peuvent également être réalisés par un processeur, sachant que le temps de calcul disponible est plus long, les paramètres du bruit $\sigma^2$ et R pouvant être évalués sur une séquence de plusieurs centaines de symboles, par exemple 200 à 1000 symboles.

## Revendications

1.    Procédé de réception d'un signal comprenant une succession de symboles, transmis par une modulation numérique, chaque symbole transmis présentant une amplitude et une phase appartenant à un ensemble de valeurs en nombre fini, le procédé comprenant des étapes d'évaluation d'une erreur de phase (PHE) sur un symbole reçu (S), résultant d'un bruit de transmission du signal, de correction de la phase du symbole reçu en fonction de l'erreur de phase évaluée, et de démodulation du symbole corrigé en phase,

**caractérisé en ce qu'**il comprend une étape de modélisation du bruit de transmission par une composante gaussienne ajoutée à une composante d'interférence, la composante gaussienne étant non corrélée avec le signal reçu, et entièrement définie par une puissance, $2\sigma^2$, la composante d'interférence étant entièrement définie par une amplitude (R) et présentant une phase distribuée sensiblement uniformément, l'erreur de phase du symbole reçu étant évaluée sur la base de la puissance de la composante gaussienne et de l'amplitude de la composante d'interférence.

2. Procédé selon la revendication 1, comprenant une étape d'évaluation de valeurs moyennes de la puissance de la composante gaussienne et de l'amplitude (R) de la composante d'interférence du bruit sur un certain nombre de symboles reçus.

3. Procédé selon la revendication 1 ou 2, dans lequel l'erreur de phase (PHE) du symbole reçu (S) est évaluée par un algorithme de calcul de maximum de vraisemblance basé sur un calcul de dérivée en phase d'une somme de logarithmes de probabilités que la phase du symbole reçu soit égale à chacune des valeurs de l'ensemble fini de phases de la modulation.

4. Procédé selon l'une des revendications 1 à 3, dans lequel l'erreur de phase (PHE) du symbole reçu (S) est évaluée à l'aide de l'équation suivante :

$$PHE(S) = \frac{\sum_{i=1}^{m}(I\cdot bk - Q\cdot ak)\cdot LUT1[rk]}{\sum_{i=1}^{m} LUT0[rk]}$$

dans laquelle I est Q sont les parties réelle et imaginaire du symbole reçu, ak et bk sont les parties réelle et imaginaire d'un point (Pk) de la constellation de modulation comportant m points, rk est la distance dans le plan complexe entre une position du symbole reçu et le point (Pk) de la constellation, et LUT0[rk] et LUT1[rk] sont des tables de correspondance, la table LUT0[rk] contenant des valeurs approximant une fonction de probabilité qu'une valeur de distance rk soit égale à la distance entre la position du symbole reçu et le point (Pk) de la constellation, dans la direction d'une droite passant par la position du symbole S et le point Pk, et la table LUT[rk] contenant des valeurs approximant la fonction dérivée de la fonction de probabilité approximée par la table LUT0[rk], divisée par la distance r, à un coefficient de proportionnalité près.

5. Procédé selon la revendication 4, comprenant des étapes d'évaluation de la puissance de la composante gaussienne et de l'amplitude (R) de la composante d'interférence du bruit, à partir d'une séquence de plusieurs centaines de symboles reçus, et d'évaluation des valeurs contenues dans les tables de correspondance (LUT0, LUT1) en fonction de la puissance de la composante gaussienne et de l'amplitude de la composante d'interférence du bruit évaluées.

6. Procédé selon la revendication 4 ou 5, dans lequel les valeurs des tables de correspondance LUT0[r] et LUT1[r] sont évaluées à un coefficient de proportionnalité près à l'aide des équations suivantes :

$$LUT0[r] = I0(u)\cdot exp(v) \quad et \quad LUT1[r] = \frac{i}{\sigma^2}\left[1 - \frac{R^2}{2\sigma^2}\cdot T(u)\right]\cdot LUT0[r]$$

dans lesquelles $u = \frac{r\cdot R}{\sigma^2}$, $v = -\frac{r^2 + R^2}{2\sigma^2}$, I0(u) est une fonction de Bessel modifiée de la première espèce,

$2\sigma^2$ est la puissance de la composante gaussienne du bruit, $T(u) = \frac{2}{u}\cdot\frac{I1(u)}{I0(u)}$ et I1(u) est la fonction dérivée par rapport à u de la fonction I0(u).

**7.** Procédé selon la revendication 5 ou 6, comprenant une étape d'évaluation de la puissance de la composante gaussienne $2\sigma^2$ et de l'amplitude R de la composante d'interférence du bruit, à l'aide des équations suivantes :

$$R^2 = \langle B0 \rangle - \langle B1 \rangle \text{ et } 2\sigma^2 = \langle B1 \rangle$$

dans lesquelles $(\ )$ représente l'opérateur de moyennage sur une séquence de plusieurs symboles reçus,

$$B0 = \frac{\sum_{k=1}^{m} rk^2 LUT0[rk]}{\sum_{k=1}^{m} LUT0[rk]} \text{ et } B1 = \frac{\sum_{k=1}^{m} rk^2 LUT1[rk]}{\sum_{k=1}^{m} LUT0[rk]}.$$

**8.** Procédé selon l'une des revendications 1 à 7, comprenant une étape de correction d'une valeur de chaque symbole reçu obtenue par démodulation du symbole reçu, l'étape de correction exploitant une table de correspondance (LUT0) utilisée pour l'évaluation d'une erreur de phase (PHE) sur un symbole reçu (S), et contenant des valeurs approximant une fonction de probabilité qu'une valeur (rk) soit égale à la distance entre la position du symbole reçu et un point (Pk) de la constellation de modulation.

**9.** Dispositif de réception d'un signal comprenant une succession de symboles, transmis par une modulation numérique, chaque symbole transmis présentant une phase et une amplitude appartenant à un ensemble de valeurs en nombre fini,
**caractérisé en ce qu'**il comprend un circuit d'évaluation d'erreur de phase (PHD, PHD1, PHD2, PHD3) mettant en oeuvre ie procédé selon l'une des revendications 1 à 8.

**10.** Dispositif selon la revendication 9, dans lequel le circuit d'évaluation d'erreur de phase (PHD, PHD1, PHD2, PHD3) comprend un accès à une première table de correspondance (LUT0) contenant des valeurs approximant une fonction de probabilité qu'une valeur de distance soit égale à la distance (rk) entre la position du symbole reçu et un point (Pk) d'une constellation de la modulation de phase numérique, et un accès à une seconde table de correspondance (LUT1) contenant des valeurs approximant la fonction dérivée de la fonction de probabilité approximée par la première table de correspondance.

**11.** Dispositif selon la revendication 10, dans lequel le circuit d'évaluation d'erreur de phase (PHD, PHD1, PHD2, PHD3) comprend des accumulateurs (ACC1, ACC2) combinés à des additionneurs (A1, A2) et des commutateurs (I1, I2) pour calculer une première somme de valeurs lues dans la première table de correspondance (LUT0) et pour calculer une seconde somme de valeurs lues dans la seconde table de correspondance (LUT1) pondérées par un coefficient de pondération (I.bk - Q.ak), les valeurs lues dans les tables de correspondance étant obtenues en fonction de distances (rk) entre la position du symbole reçu et chacun des points (Pk) d'une constellation de la modulation de phase numérique, et des moyens de calcul pour calculer une erreur de phase obtenue en divisant la seconde somme pondérée par la première somme.

**12.** Dispositif selon la revendication 10 ou 11, dans lequel le circuit d'évaluation d'erreur de phase (PHD, PHD1, PHD2, PHD3) comprend un circuit de calcul (DPC, DPC1) pour chacun des points d'une constellation de la modulation de phase numérique, chacun des circuits de calcul étant configuré pour déterminer une valeur lue dans la première table de correspondance (LUT0) et une valeur lue dans la seconde table de correspondance (LUT1), en fonction d'une distance (rk) entre la position du symbole reçu et un point (Pk) d'une constellation de la modulation de phase numérique, et pour multiplier la valeur lue dans la seconde table de correspondance par un coefficient de pondération (i.bk - Q.ak) dépendant de valeurs du symbole reçu et du point de la constellation, le circuit d'évaluation d'erreur de phase comprenant un premier additionneur (A1') pour calculer la somme des valeurs lues dans la première table de correspondance, et un second additionneur (A2') pour calculer la somme pondérée des valeurs lues dans la seconde table de correspondance.

**13.** Dispositif selon l'une des revendications 10 à 12, dans lequel le circuit d'évaluation d'erreur de phase (PHD2, PHD3) comprend un circuit de calcul de deux quantités (B0, B1) utilisant les valeurs lues dans les tables de correspondance (LUT0, LUT1), et un circuit de calcul (LTUD) de valeurs moyennes ($\langle B0 \rangle$, $\langle B1 \rangle$) des deux quantités sur une séquence de plusieurs centaines de symboles reçus (S), d'estimation de la puissance de la composante gaussienne et de l'amplitude (R) de la composante d'interférence, et de calcul et mise à jour des valeurs des tables de correspondance.

**14.** Dispositif selon l'une des revendications 10 à 13, comprenant un démodulateur (DMP) pour démoduler les symboles corrigés en phase à partir de l'erreur de phase évaluée par le circuit d'évaluation d'erreur de phase (PHD, PHD1, PHD2, PHD3), le démodulateur recevant les valeurs lues dans la première table de correspondance (LUT0) pour corriger la valeur des symboles démodulés.

**15.** Système de transmission par une modulation numérique d'un signal comprenant une succession de symboles, chaque symbole transmis présentant une phase et une amplitude appartenant à un ensemble de valeurs en nombre fini,
**caractérisé en ce qu'**il comprend un dispositif de réception selon l'une des revendications 9 à 14, pour recevoir le signal transmis.

## Patentansprüche

**1.** Verfahren zum Empfang eines Signals umfassend eine Abfolge von durch eine digitale Modulation übertragenen Zeichen, wobei jedes übertragene Zeichen eine Amplitude und eine Phase aufweist, die zu einem Wertevorrat in endlicher Anzahl gehören, das Verfahren umfassend Schritte der Auswertung eines aus einem Rauschen der Übertragung des Signals, der Korrektur der Phase des empfangenen Zeichens in Abhängigkeit von dem ausgewerteten Phasenfehler und der Demodulation des phasenkorrigierten Zeichens entstandenen Phasenfehlers (PHE) in einem empfangenen Zeichen (S),
**dadurch gekennzeichnet, dass** das Verfahren einen Schritt der Modelisierung des Übertragungsrauschens mittels einer, einer Interferenzkomponente beigefügten Gauß-Komponente umfasst, wobei die Gauß-Komponente nicht mit dem empfangenen Signal korreliert und vollständig von einer Leistung, $2\sigma^2$, definiert ist, die Interferenzkomponente vollständig von einer Amplitude (R) definiert ist und eine im wesentlichen einheitlich verteilte Phase aufweist und der Phasenfehler des empfangenen Zeichens auf der Grundlage der Leistung der Gauß-Komponente und der Amplitude der Interferenzkomponente ausgewertet wird.

**2.** Verfahren nach Anspruch 1, umfassend einen Schritt der Auswertung von Durchschnittswerten der Leistung der Gauß-Komponente und der Amplitude (R) der Interferenzkomponente des Rauschens aus einer gewissen Anzahl empfangener Zeichen.

**3.** Verfahren nach Anspruch 1 oder 2, in dem der Phasenfehler (PHE) des empfangenen Zeichens (S) mittels eines Algorithmus zur Berechnung der maximalen Wahrscheinlichkeit auf der Grundlage einer Phasenableitungsberechnung einer Summe von Logarithmen der Wahrscheinlichkeiten, dass die Phase des empfangenen Zeichens gleich ist mit jedem der Werte des endlichen Wertevorrats an Modulationsphasen, ausgewertet wird.

**4.** Verfahren nach einem der Ansprüche 1 bis 3, in dem der Phasenfehler (PHE) des empfangenen Zeichens (S) mittels der folgenden Gleichung ausgewertet wird:

$$PHE(S) = \frac{\sum\limits_{i=1}^{m}(I \cdot bk - Q \cdot ak) \cdot LUT1[rk]}{\sum\limits_{i=1}^{m} LUT0[rk]}$$

in welcher I und Q die reellen und imaginären Teile des empfangenen Zeichens darstellen, ak und bk, die reellen und imaginären Teile eines Punkts (Pk) der m Punkte beinhaltenden Modulationskonstellation, rk, die Distanz auf der komplexen Ebene zwischen einer Position des empfangenen Zeichens und dem Punkt (Pk) der Konstellation und LUT0[rk] und LUT1[rk] Korrespondenztabellen sind, wobei die Korrespondenztabelle LUT0[rk] Werte beinhaltet, die eine Funktion der Wahrscheinlichkeit, dass ein Distanzwert rk gleich ist mit der Distanz zwischen der Position des empfangenen Zeichens und dem Punkt (Pk) der Konstellation in der Richtung einer durch die Position des Zeichens S und den Punkt Pk verlaufenden Geraden approximieren und wobei die Tafel LUT[rk] Werte beinhaltet, die die aus der von der Tafel LUT0[rk] approximierten Wahrscheinlichkeitsfunktion abgeleitete Funktion, geteilt durch die Distanz r, bis auf einen Proportionalitätskoeffizienten approximieren.

5. Verfahren nach Anspruch 4, umfassend Schritte der Auswertung der Leistung der Gauß-Komponente und der Amplitude (R) der Interferenzkomponente des Rauschens, ausgehend von einer Sequenz aus mehreren hundert empfangenen Zeichen, sowie der Auswertung der in den Korrespondenztabellen (LUT0, LUT1) enthaltenen Werten in Abhängigkeit von der ausgewerteten Leistung der Gauß-Komponente und der ausgewerteten Amplitude der Interferenzkomponente des Rauschens.

6. Verfahren nach Anspruch 4 oder 5, in dem die Werte der Korrespondenztabellen LUT0[r] und LUT1 [r] mittels der folgenden Gleichungen bis auf einen Proportionalitätskoeffizienten ausgewertet werden:

$$\text{LUT0}[r] = I0(u) \cdot \exp(v) \text{ et } \text{LUT1}[r] = \frac{1}{\sigma^2}\left[1 - \frac{R^2}{2\sigma^2} \cdot T(u)\right] \cdot \text{LUT0}[r]$$

in welchen $u = \dfrac{r \cdot R}{\sigma^2}$, $v = -\dfrac{r^2 + R^2}{2\sigma^2}$, I0(u) eine modifizierte Besselfunktion erster Gattung darstellt, $2\sigma^2$, die Leistung der Gauβ-Komponente des Rauschens,

$$T(u) = \frac{2}{u} \cdot \frac{I1(u)}{I0(u)}$$ und I1 (u) die in Bezug auf u der Funktion I0(u) abgeleitete Funktion.

7. Verfahren nach Anspruch 5 oder 6, umfassend einen Schritt der Auswertung der Leistung der Gauß-Komponente $2\sigma^2$ und der Amplitude R der Interferenzkomponente des Rauschens mittels der folgenden Gleichungen:

$$R^2 = \langle B0 \rangle - \langle B1 \rangle \text{ et } 2\sigma^2 = \langle B1 \rangle$$

in welchen $\langle \rangle$ den Mittelungsoperator für eine Sequenz mehrerer empfangener Zeichen, und

$$B0 = \frac{\sum\limits_{k=1}^{m} rk^2 \text{LUT0}[rk]}{\sum\limits_{k=1}^{m} \text{LUT0}[rk]} \text{ und } B1 = \frac{\sum\limits_{k=1}^{m} rk^2 \text{LUT1}[rk]}{\sum\limits_{k=1}^{m} \text{LUT0}[rk]} \text{ darstellt.}$$

8. Verfahren nach einem der Ansprüche 1 bis 7, umfassend einen Schritt der Korrektur eines Werts von jedem empfangenen Zeichen, der durch Demodulation des empfangenen Zeichens erhaltenen wurde, wobei der Korrekturschritt sich einer für die Auswertung eines Phasenfehlers (PHE) in einem empfangenen Zeichen (S) verwendete Korrespondenztabelle (LUT0) bedient und Werte beinhaltet, die eine Funktion der Wahrscheinlichkeit, dass ein Wert (rk) gleich der Distanz zwischen der Position des empfangenen Zeichens und einem Punkt (Pk) der Modulationskonstellation ist, approximieren.

9. Vorrichtung zum Empfang eines Signals umfassend eine Abfolge von durch eine digitale Modulation übertragenen Zeichen, wobei jedes übertragene Zeichen eine Phase und eine Amplitude aufweist, die zu einem Wertevorrat in endlicher Anzahl gehören, **dadurch gekennzeichnet, dass** sie eine Phasenfehlerauswertungsschaltung (PHD, PHD1, PHD2, PHD3) umfasst, die das Verfahren nach einem der Ansprüche 1 bis 8 anwendet.

**10.** Vorrichtung nach Anspruch 9, in der die Phasenfehlerauswertungsschaltung (PHD, PHD1, PHD2, PHD3) einen Zugang zu einer ersten Korrespondenztabelle (LUT0) umfasst, die Werte beinhaltet, die eine Funktion der Wahrscheinlichkeit, dass ein Distanzwert gleich der Distanz (rk) zwischen der Position des empfangenen Zeichens und einem Punkt (Pk) einer Konstellation der digitalen Phasenmodulation ist, approximieren, sowie einen Zugang zu einer zweiten Korrespondenztabelle (LUT1), die Werte beinhaltet, die, die aus der, von der ersten Korrespondenztabelle approximierten Wahrscheinlichkeitsfunktion abgeleitete Funktion approximieren.

**11.** Vorrichtung nach Anspruch 10, in der die Phasenfehlerauswertungsschaltung (PHD, PHD1, PHD2, PHD3) Akkumulatoren (ACC1, ACC2) umfasst, die mit Addierern (A1, A2) und Kommutatoren (11, 12) kombiniert sind, um eine erste Summe von in der ersten Korrespondenztabelle (LUT0) gelesenen Werten zu berechnen und um eine zweite Summe von, durch einen Wichtungskoeffizienten (I.bk - Q.ak) gewichteten, in der zweiten Korrespondenztabelle (LUT1) gelesenen Werten zu berechnen, wobei die in den Korrespondenztabellen gelesenen Werte in Abhängigkeit von Distanzen (rk) zwischen der Position des empfangenen Zeichens und jedem der Punkte (Pk) einer Konstellation der digitalen Phasenmodulation erhalten wurden, sowie Mittel zur Berechnung eines durch Teilung der zweiten gewichteten Summe durch die erste Summe erhaltenen Phasenfehlers.

**12.** Vorrichtung nach Anspruch 10 oder 11, in der die Phasenfehlerauswertungsschaltung (PHD, PHD1, PHD2, PHD3) eine Berechnungsschaltung (DPC, DPC1) für jeden der Punkte einer Konstellation der digitalen Phasenmodulation umfasst, wobei jede der Berechnungsschaltungen konfiguriert ist, um einen in der ersten Korrespondenztabelle (LUT0) gelesenen Wert und einen in der zweiten Korrespondenztabelle (LUT1) gelesenen Wert in Abhängigkeit einer Distanz (rk) zwischen der Position des empfangenen Zeichens und einem Punkt (Pk) einer Konstellation der digitalen Phasenmodulation zu bestimmen und um den in der zweiten Korrespondenztabelle gelesenen Wert mit einem Wichtungskoeffizienten (I.bk - Q.ak) zu multiplizieren, der von Werten des empfangenen Zeichens und von dem Konstellationspunkt abhängt, wobei die Phasenfehlerauswertungsschaltung einen ersten Addierer (A1') umfasst, um die Summe der in der ersten Korrespondenztabelle gelesenen Werte zu berechnen, sowie einen zweiten Addierer (A2'), um die gewichtete Summe der in der zweiten Korrespondenztabelle gelesenen Werte zu berechnen.

**13.** Vorrichtung nach einem der Ansprüche 10 bis 12, in der die Phasenfehlerauswertungsschaltung (PHD2, PHD3) eine Schaltung zur Berechnung von zwei Mengen (B0, B1) umfasst, die die in den Korrespondenztabellen (LUT0, LUT1) gelesenen Werte verwendet und eine Schaltung (LTUD) zur Berechnung von Mittelwerten (⟨B0⟩,⟨B1⟩) der beiden Mengen aus einer Sequenz von mehreren hundert empfangenen Zeichen (S), zur Schätzung der Leistung der Gauß-Komponente und der Amplitude (R) der Interferenzkomponente, sowie zur Berechnung und Aktualisierung der Werte der Korrespondenztabellen.

**14.** Vorrichtung nach einem der Ansprüche 10 bis 13, umfassend einen Demodulator (DMP), um die phasenkorrigierten Zeichen ausgehend von dem von der Phasenfehlerauswertungsschaltung (PHD, PHD1, PHD2, PHD3) ausgewerteten Phasenfehler zu demodulieren, wobei der Demodulator die in der ersten Korrespondenztabelle (LUT0) gelesenen Werte empfängt, um den Wert der demodulierten Zeichen zu korrigieren.

**15.** System zur Übertragung durch eine digitale Modulation eines Signals umfassend eine Abfolge von Zeichen, wobei jedes übertragene Zeichen eine Phase und eine Amplitude aufweist, die zu einem endlichen Wertevorrat gehören, **dadurch gekennzeichnet dass** es eine Empfangsvorrichtung nach einem der Ansprüche 9 bis 14 umfasst, um das übertragene Signal zu empfangen.

**Claims**

**1.** A method for receiving a signal comprising a succession of symbols, transmitted by a digital modulation, each symbol transmitted having an amplitude and a phase belonging to a set of values in finite number, the method comprising steps of evaluating a phase error (PHE) on a received symbol (S), resulting from a signal transmission noise, of correcting the phase of the received symbol according to the phase error evaluated, and of demodulating the phase-corrected symbol,
**characterized in that** it comprises a step of modeling the transmission noise by means of a Gaussian component added to an interference component, the Gaussian component not being correlated with the received signal and entirely defined by a power, $2\sigma^2$, the interference component being entirely defined by an amplitude (R) and having a substantially uniformly distributed phase, the phase error of the received symbol being evaluated based on the power of the Gaussian component and the amplitude of the interference component.

2. Method according to claim 1, comprising a step of evaluating average values of the power of the Gaussian component and the amplitude (R) of the interference component of the noise over a certain number of received symbols.

3. Method according to claim 1 or 2, wherein the phase error (PHE) of the received symbol (S) is evaluated by a maximum likelihood calculation algorithm based on a phase derivative calculation of a sum of logarithms of probabilities that the phase of the received symbol is equal to each of the values of the finite set of phases of the modulation.

4. Method according to one of claims 1 to 3, wherein the phase error (PHE) of the received symbol (S) is evaluated using the following equation:

$$PHE(S) = \frac{\sum_{i=1}^{m}(I \cdot bk - Q \cdot ak) \cdot LUT1[rk]}{\sum_{i=1}^{m} LUT0[rk]}$$

where I and Q are the real and imaginary parts of the received symbol, ak and bk are the real and imaginary parts of a point (Pk) of the modulation constellation comprising m points, rk is the distance in the complex plane between a position of the received symbol and the point (Pk) of the constellation, and LUT0[rk] and LUT1[rk] are look-up tables, the table LUT0[rk] containing values approximating a probability function that a value of distance rk is equal to the distance between the position of the received symbol and the point (Pk) of the constellation, in the direction of a straight line passing through the position of the symbol S and the point Pk, and the table LUT[rk] containing values approximating the function derived from the probability function approximated by the table LUT0[rk], divided by the distance r, to within one proportionality factor.

5. Method according to claim 4, comprising steps of evaluating the power of the Gaussian component and the amplitude (R) of the interference component of the noise, from a sequence of several hundred received symbols, and of evaluating the values contained in the look-up tables (LUT0, LUT1) according to the evaluated power of the Gaussian component and to the evaluated amplitude of the interference component of the noise.

6. Method according to claim 4 or 5, wherein the values of the look-up tables LUT0[r] and LUT1[r] are evaluated to within one proportionality factor using the following equations:

$$LUT0[r] = I0(u) \cdot \exp(v) \quad \text{and} \quad LUT1[r] = \frac{1}{\sigma^2}\left[1 - \frac{R^2}{2\sigma^2} \cdot T(u)\right] \cdot LUT0[r]$$

where $u = \dfrac{r \cdot R}{\sigma^2}$, $v = -\dfrac{r^2 + R^2}{2\sigma^2}$, I0(u) is a modified Bessel function of the first kind, $2\sigma^2$ is the power of the Gaussian component of the noise,

$$T(u) = \frac{2}{u} \cdot \frac{I1(u)}{I0(u)}$$ and I1 (u) is the derived function in relation to u of the function I0(u).

7. Method according to claim 5 or 6, comprising a step of evaluating the power of the Gaussian component $2\sigma^2$ and the amplitude R of the interference component of the noise, using the following equations:

$$R^2 = \langle B0 \rangle - \langle B1 \rangle \quad \text{and} \quad 2\sigma^2 = \langle B1 \rangle$$

where $\langle\rangle$ is the averaging operator over a sequence of several received symbols, $B0 = \dfrac{\sum\limits_{k=1}^{m} rk^2 LUT0[rk]}{\sum\limits_{k=1}^{m} LUT0[rk]}$ and

$$B1 = \dfrac{\sum\limits_{k=1}^{m} rk^2 LUT1[rk]}{\sum\limits_{k=1}^{m} LUT0[rk]} \ .$$

8. Method according to one of claims 1 to 7, comprising a step of correcting a value of each received symbol obtained by demodulating the received symbol, the correction step using a look-up table (LUT0) used to evaluate a phase error (PHE) on a received symbol (S), and containing values approximating a probability function that a value (rk) is equal to the distance between the position of the received symbol and a point (Pk) of the modulation constellation.

9. A device for receiving a signal comprising a succession of symbols, transmitted by a digital modulation, each symbol transmitted having a phase and an amplitude belonging to a set of values in finite number, **characterized in that** it comprises a phase error evaluation circuit (PHD, PHD1, PHD2, PHD3) implementing the method according to one of claims 1 to 8.

10. Device according to claim 9, wherein the phase error evaluation circuit (PHD, PHD1, PHD2, PHD3) comprises an access to a first look-up table (LUT0) containing values approximating a probability function that a distance value is equal to the distance (rk) between the position of the received symbol and a point (Pk) of a constellation of the digital phase modulation, and an access to a second look-up table (LUT1) containing values approximating the function derived from the probability function approximated by the first look-up table.

11. Device according to claim 10, wherein the phase error evaluation circuit (PHD, PHD1, PHD2, PHD3) comprises accumulators (ACC1, ACC2) combined with adders (A1, A2) and switches (11, 12) for calculating a first sum of values read in the first look-up table (LUT0) and for calculating a second sum of values read in the second look-up table (LUT1) weighted by a weighting factor (I.bk - Q.ak), the values read in the look-up tables being obtained according to distances (rk) between the position of the received symbol and each point (Pk) of a constellation of the digital phase modulation, and calculation means for calculating a phase error obtained by dividing the second weighted sum by the first sum.

12. Device according to claim 10 or 11, wherein the phase error evaluation circuit (PHD, PHD1, PHD2, PHD3) comprises a calculation circuit (DPC, DPC1) for each point of a constellation of the digital phase modulation, each calculation circuit being configured to determine a value read in the first look-up table (LUT0) and a value read in the second look-up table (LUT1), according to a distance (rk) between the position of the received symbol and a point (Pk) of a constellation of the digital phase modulation, and to multiply the value read in the second look-up table by a weighting factor (I.bk - Q.ak) depending on values of the received symbol and the point of the constellation, the phase error evaluation circuit comprising a first adder (A1') for calculating the sum of the values read in the first look-up table, and a second adder (A2') for calculating the weighted sum of the values read in the second look-up table.

13. Device according to one of claims 10 to 12, wherein the phase error evaluation circuit (PHD2, PHD3) comprises a circuit for calculating two quantities (B0, B1) using the values read in the look-up tables (LUT0, LUT1), and a calculation circuit (LTUD) for calculating average values ($\langle B0\rangle,\langle B1\rangle$) of the two quantities over a sequence of several hundred received symbols (S), evaluating the power of the Gaussian component and the amplitude (R) of the interference component, and calculating and updating the values of the look-up tables.

14. Device according to one of claims 10 to 13, comprising a demodulator (DMP) for demodulating the phase-corrected symbols from the phase error evaluated by the phase error evaluation circuit (PHD, PHD1, PHD2, PHD3), the demodulator receiving the values read in the first look-up table (LUT0) to correct the value of the demodulated symbols.

**15.** A system for transmitting by a digital modulation a signal comprising a succession of symbols, each symbol transmitted having a phase and an amplitude belonging to a set of values in finite number,
**characterized in that** it comprises a reception device according to one of claims 9 to 14, for receiving the signal transmitted.

Fig. 1

Fig. 2

Fig. 3

Fig. 4

Fig. 5

Fig. 6

Fig. 7

DMP

PHE

PHD2

S(I,Q)

I·bk–Q·ak

(ak,bk)

CMB

|x|

rk

LUT0

LUT1

M6

M1

M7

M5

A5

A1

A2

A3

A4

ACC1

ACC2

ACC3

ACC4

I1

I2

I3

I4

1/x

M2

M3

B0

M4

B1

CTL

LTUD

B0 B1

Fig. 8

**EP 2 315 405 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PEIXIN DONG.** *Iterative phase recovery method of turbo-coded 16 QAM based on soft symbol to bit mapping*